# FASCICULE DE BREVET EUROPEEN

(11) **EP 3 899 120 B1**
(45) Date de publication et mention de la délivrance du brevet: **06.08.2025**
(21) Numéro de dépôt: 19868199.1
(22) Date de dépôt: 29.11.2019
(51) Int. Cl.: B29B 11/16, D03D 41/00, D03D 25/00

(54) **TEXTURE FIBREUSE TISSÉE**
GEWEBTE FASERTEXTUR
WOVEN FIBROUS TEXTURE

(30) Priorité: 21.12.2018 FR 1873865
(43) Date de publication de la demande: 27.10.2021
(73) Titulaire: SAFRAN, 75015 Paris (FR)
(72) Inventeur: DAMBRINE, Bruno Jacques Gérard, 77550 MOISSY-CRAMAYEL (FR); COUPE, Dominique Marie Christian, 77550 MOISSY-CRAMAYEL (FR); TRANQUART, Bastien, 77550 MOISSY-CRAMAYEL (FR)
(74) Mandataire: Cabinet Beau de Loménie
(86) Numéro de dépôt international: PCT/FR2019/052869
(87) Numéro de publication internationale: WO 2020/128191

(56) Documents cités:
- FR-A1- 2 964 426
- US-A1- 2009 074 586
- US-B2- 8 500 410

## Description

### Domaine Technique

La présente invention concerne une texture fibreuse tissée comprenant au moins un élément d'amortissement des vibrations en matériau viscoélastique, ainsi qu'une pièce de turbomachine en matériau composite incorporant cette texture fibreuse.

### Technique antérieure

L'amortissement des structures a toujours été une préoccupation dans les turbomachines et notamment dans les parties tournantes.

Les aubes de soufflante, composites ou non, sont soumises aux excitations du moteur. Lors des coïncidences fréquentielles les niveaux de contraintes vibratoires peuvent amener à redimensionner l'aube souvent au détriment des performances. L'augmentation de l'amortissement des vibrations dans une structure permettrait d'améliorer les performances en général et plus particulièrement les performances aérodynamiques (marge au pompage, flottement) et mécaniques (fatigue à grand nombre de cycles « High Cycle Fatigue »).

Le document FR 2 964 426 A1 divulgue une texture fibreuse tissée selon le préambule de la revendication 1.

Il est souhaitable que la solution employée pour augmenter l'amortissement des vibrations ne pénalise pas la masse de la structure.

### Exposé de l'invention

L'invention vise, selon un premier aspect, une texture fibreuse tissée destinée à former le renfort fibreux d'une pièce de turbomachine selon la revendication 1.

Dans la texture fibreuse tissée selon l'invention, la première partie présente une raideur supérieure à celle présentée par la deuxième partie de la texture en tissu 3D. Le fait d'intercaler l'élément amortissant en matériau viscoélastique entre ces deux parties qui ont des raideurs différentes permet avantageusement de cisailler cet élément, augmentant ainsi la dissipation dans la portion de la texture considérée et induisant une augmentation de l'amortissement. Cette solution permet ainsi de dissiper l'énergie vibratoire sans pénaliser la masse de la texture.

Dans un exemple de réalisation, la texture comprend en outre un deuxième élément d'amortissement des vibrations en un deuxième matériau viscoélastique présent dans un deuxième logement défini par une deuxième zone de déliaison, ladite deuxième zone de déliaison séparant, sur une deuxième portion de la texture, une troisième partie de surface de la texture d'une quatrième partie de la texture formée par un deuxième tissu tridimensionnel dans lequel des premiers fils sont liés avec des deuxièmes fils, la troisième partie de surface de la texture étant formée par une deuxième couche unidimensionnelle de premiers fils ou étant formée par un deuxième tissu bidimensionnel dans lequel des premiers fils sont liés avec des deuxièmes fils.

Une telle caractéristique est avantageuse lorsqu'il est souhaitable de dissiper l'énergie vibratoire dans différentes portions de la texture.

Dans un exemple de réalisation, chaque élément d'amortissement présente un facteur de perte en cisaillement supérieur ou égal à 0,2 sur la plage de température comprise entre -50°C et 120°C, le facteur de perteen cisaillement étant déterminé en imposant une sollicitation en cisaillement sinusoïdale de fréquence égale à 100 Hz. Le facteur de perte en cisaillement d'un matériau est, de manière connue en soi, le rapport entre la partie imaginaire de son module de cisaillement complexe et la partie réelle de son module de cisaillement complexe. Le facteur de perte en cisaillement correspond à la tangente du déphasage de la déformation subie par le matériau par rapport à la sollicitation en cisaillement, ce facteur quantifiant la quantité d'énergie absorbée par le matériau lors de sa déformation sous cette sollicitation.

Une telle caractéristique permet avantageusement de dissiper davantage encore l'énergie vibratoire.

Le facteur de perte en cisaillement de chaque élément d'amortissement peut en particulier être supérieur ou égal à 0,4.

Dans un exemple de réalisation, chaque élément d'amortissement des vibrations comprend un matériau élastomère. Le matériau élastomère peut ou non être chargé, par exemple par du carbone. Selon un exemple, on peut utiliser en tant qu'élément d'amortissement un matériau élastomère, chargé ou non, et supporté par une structure fibreuse comme une nappe de fils unidimensionnelle ou un tissu, ladite nappe ou ledit tissu étant par exemple en fils de carbone. Une telle caractéristique permet de faciliter la manipulation de l'élément d'amortissement et son insertion dans la texture fibreuse. A titre d'exemple non limitatif, le matériau élastomère peut par exemple être un élastomère réticulé, du caoutchouc naturel (NR), du caoutchouc synthétique (IR), du polybutadiène (BR), du styrène-butadiène (SBR), du butadièneacrylonitrile (NBR), de l'ethylène-propylène-diène (EPDM), du polyuréthane (PU/EU), du polychloroprène (CR), de l'isobutylène-isoprène (IIR), du silicone (polysiloxane) (SI), du fluoroélastomère (FKM/FPM), du perfluoroélastomère (FFKM), du fluorosilicone, du polyéthylène chlorosulfoné (CSM), de l'épichlorhydrine (CO/ECO), du caoutchouc nitrile (NBR), du caoutchouc nitrile à terminaison époxy (ETBN), du polybutadiène carboxylé (CTBN), ou encore du caoutchouc nitrile à terminaison amine (ATBN). Le matériau élastomère peut également être de l'acrylonitrile butadiène styrène (ABS), du polyamide (PA), de la polyétheréthercétone (PEEK), ou du polyétherimide (PEI).

Dans un exemple de réalisation, chaque élément d'amortissement des vibrations a une forme plane.

Dans un exemple de réalisation, la première partie de surface de la texture est formée par une couche unidimensionnelle de premiers fils, les premiers fils de cette couche unidimensionnelle étant maintenus en position par un élément de maintien.

L'emploi d'un tel élément de maintien est avantageux lorsque l'on utilise une couche unidimensionnelle en tant que première partie de surface afin d'éviter tout risque que les premiers fils ne s'écartent de la direction de sollicitation souhaitée pour ces derniers. Cela confère à la première partie de surface une raideur maximale afin d'optimiser la dissipation de l'énergie vibratoire.

L'élément de maintien peut être un élément thermofusible ou un adhésif. L'adhesif peut être déposé sur les fils de la première partie à l'aide d'un applicateur ou être pulvérisé sur ces derniers. Dans le cas d'un matériau thermofusible, le maintien en position des fils de la couche unidimensionnelle est assuré par fusion du matériau thermofusible pour imprégner les fils par le matériau fondu puis solidification de ce matériau afin de lier les fils imprégnés et les maintenir en position. L'élément thermofusible peut être sous la forme d'une composition pulvérulente, d'un voile de matière ou d'une pluralité de fils. L'élément thermofusible peut par exemple comporter un polymère thermoplastique. Dans le cas où la troisième partie de surface de la texture est formée par une deuxième couche unidimensionnelle de premiers fils, ces derniers peuvent être maintenus par un élément de maintien, d'une manière similaire à ce qui vient d'être décrit.

Dans un exemple de réalisation, les premiers fils et les deuxièmes fils sont en fibres de carbone.

L'invention vise également une pièce de turbomachine en matériau composite comprenant un renfort fibreux formé par une texture telle que décrite plus haut et une matrice densifiant ledit renfort fibreux.

Dans un exemple de réalisation, la matrice est une matrice organique.

Dans un exemple de réalisation, la pièce est une pièce de soufflante de moteur aéronautique. En particulier, la pièce peut être une aube de soufflante de moteur aéronautique ou un carter de soufflante de moteur aéronautique.

L'invention vise également une turbomachine comprenant une pièce telle que décrite plus haut.

### Brève description des dessins

[Fig. 1] La figure 1 est une coupe schématique et partielle d'un premier exemple de texture fibreuse selon l'invention.
[Fig. 2] La figure 2 est une photographie de l'exemple de texture selon la figure 1 montrant l'élément amortissant partiellement inséré dans le logement défini par la zone de déliaison.
[Fig. 3] La figure 3 est une photographie de l'exemple de texture selon la figure 1 montrant l'élément amortissant entièrement inséré dans le logement défini par la zone de déliaison.
[Fig. 4] La figure 4 est une coupe schématique et partielle d'un deuxième exemple de texture fibreuse selon l'invention.
[Fig. 5] La figure 5 est une vue en perspective d'un moteur aéronautique selon une réalisation de l'invention.

### Description des modes de réalisation

Dans la suite, l'expression « élément d'amortissement des vibrations » sera être désignée par l'expression « élément amortissant » par souci de concision.

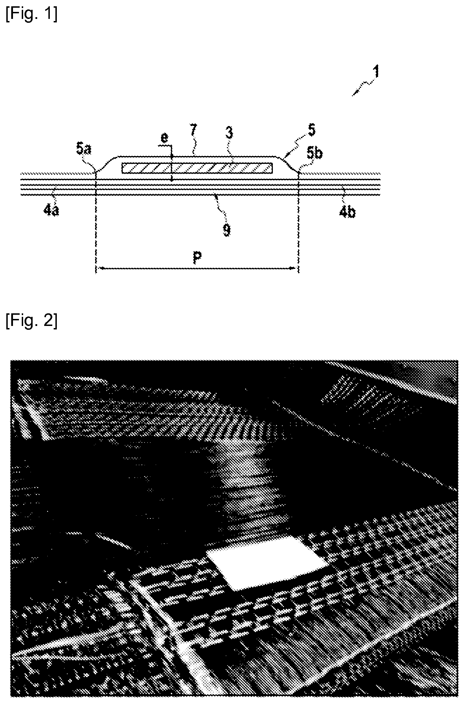

On a représenté à la figure 1 un premier exemple de texture 1 fibreuse tissée selon l'invention. Cette texture fibreuse 1 est tissée en une seule pièce et comprend des premiers fils tissés avec des deuxièmes fils.

Les premiers fils peuvent être des fils de chaine et les deuxièmes fils peuvent être des fils de trame ou, inversement, les premiers fils peuvent être des fils de trame et les deuxièmes fils peuvent être des fils de chaine. A toutes fins utiles, il est précisé que, sauf mention contraire, une inversion des rôles entre chaine et trame est possible dans le présent texte, et doit être considérée comme couverte aussi par les revendications.

La texture fibreuse 1 comprend un élément amortissant 3 en matériau viscoélastique qui est présent dans un logement 5 défini par une zone de déliaison de la texture 1.

La zone de déliaison définissant le logement 5 correspond à une zone délimitée par une première limite 5a et une deuxième limite 5b de déliaison. La zone de déliaison s'étend sur une portion P qui est située entre une portion amont 4a de la texture 1 et une portion aval 4b de la texture 1.

La zone de déliaison sépare, sur la portion P de la texture 1, une première partie 7 de surface de la texture d'une deuxième partie 9 de la texture formée par un tissu tridimensionnel dans lequel des premiers fils sont tissés avec des deuxièmes fils. La première partie de surface de la texture est formée par une couche unidimensionnelle de premiers fils ou par un tissu bidimensionnel dans lequel des premiers fils sont liés avec des deuxièmes fils.

Par « tissu tridimensionnel », il faut comprendre un mode de tissage par lequel certains au moins des premiers fils lient entre eux des deuxièmes fils appartenant à des couches de deuxièmes fils différentes. Le tissu tridimensionnel peut être à armure interlock, multi-satin ou multi-toile, comme décrit notamment dans le document WO 2006/136755.

Le présent paragraphe concerne l'alternative où la première partie 7 est formée par une couche unidimensionnelle de premiers fils. Dans ce cas, les premiers fils ne sont pas tissés avec les deuxièmes fils dans la première partie 7. La première partie 7 comprend uniquement des premiers fils s'étendant sensiblement dans la même direction. La première partie 7 comprend une unique couche de premiers fils. La première partie 7 ne comprend pas de deuxième fil. Comme indiqué plus haut, les premiers fils peuvent dans ce cas être maintenus en position par un élément thermofusible, par exemple.

Selon une variante, la première partie 7 comprend des premiers fils et des deuxièmes fils, ces premiers et deuxièmes fils étant tissés entre eux selon un motif de tissage bidimensionnel dans la première partie 7.

La première partie 7 s'étend entre la première limite 5a et la deuxième limite 5b. La première partie 7, la zone de déliaison et la deuxième partie 9 peuvent être superposées le long de l'épaisseur de la texture fibreuse 1.

Dans la portion amont 4a, les premiers fils lient les deuxièmes fils, avec un motif de tissage tridimensionnel, par exemple à armure interlock, multi-satin ou multi-toile. Dans la portion aval 4b, les premiers fils lient les deuxièmes fils, avec un motif de tissage tridimensionnel, par exemple à armure interlock, multi-satin ou multi-toile. Le motif de tissage n'est pas nécessairement le même dans les portions amont 4a et aval 4b. Dans la portion P, les premiers fils sont séparés en deux sous-ensembles : le premier sous-ensemble de premiers fils est présent dans la première partie 7 et le deuxième sous-ensemble de premiers fils est tissé avec des deuxièmes fils dans la deuxième partie 9. Cette séparation des premiers fils en ces deux sous-ensembles est initiée au niveau de la première limite 5a de déliaison et se termine au niveau de la deuxième limite 5b de déliaison.

La raideur de la première partie 7, mesurée le long de l'axe d'élongation des premiers fils dans cette partie, peut être supérieure ou égale à 75 GPa, par exemple supérieure ou égale à 150 GPa. Sauf mention contraire, les valeurs de raideur sont prises à la température de 20°C.

La raideur de la deuxième partie 9, mesurée le long de l'axe d'élongation des premiers fils dans cette partie, peut être inférieure ou égale à 110 GPa. L'épaisseur de la deuxième partie 9 est supérieure à l'épaisseur de la première partie 7, par exemple supérieure ou égale à 5 fois l'épaisseur de la première partie 7.

L'élément amortissant 3 est présent entre la première partie 7 et la deuxième partie 9. L'élément amortissant 3 peut être au contact de la première partie 7 et de la deuxième partie 9. L'élément amortissant 3 est enserré entre la première partie 7 et la deuxième partie 9. L'épaisseur e de l'élément amortissant peut être supérieure ou égale à 0,1 mm, par exemple comprise entre 0,1 mm et 2 mm. L'élément amortissant 3 peut avoir une forme plane, avant mise en forme éventuelle de la texture à la forme de la pièce. L'élément amortissant 3 peut être sous la forme d'un patch. L'élément amortissant peut comporter un matériau élastomère comme évoqué plus haut.

L'élément amortissant 3 peut être présent sur au moins un quart, voire sur au moins la moitié et par exemple sur au moins les trois-quarts, d'une plus grande dimension du logement 5.

Selon un exemple de réalisation, on peut utiliser un élément amortissant 3 comprenant un élastomère et ayant une épaisseur égale à 0,2 mm à l'intérieur d'une texture 1 en fibres de carbone pour laquelle la raideur de la première partie 7 est égale à 190 GPa, et la raideur de la deuxième partie 9 est égale à 90 GPa.

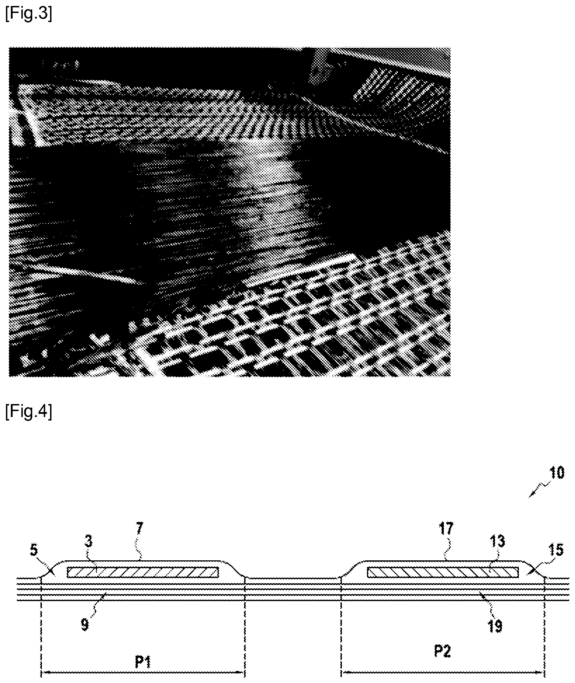

Les figures 2 et 3 sont des photographies de la texture selon la figure 1 montrant notamment l'élément amortissant (en blanc) intercalé entre la première et la deuxième partie de la texture. La figure 2 montre l'élément amortissant partiellement sorti du logement et la figure 3 montre l'élément amortissant entièrement à l'intérieur du logement.

On va maintenant décrire les étapes de la fabrication de l'exemple de texture 1 de la figure 1 ainsi que d'une pièce en matériau composite incorporant une telle texture. Il est entendu que cette description de la fabrication s'applique *mutatis mutandis* à l'exemple de texture 10 qui sera décrit plus bas en lien avec la figure 4.

La texture fibreuse est tout d'abord réalisée par tissage. Lors du tissage de la texture 1, le tissage entre une partie des premiers fils et des deuxièmes fils peut être interrompu à partir de la première limite 5a ou être modifié pour former la première partie 7. Le tissage entre cette partie des premiers fils et des deuxièmes fils peut ensuite repris à partir de la deuxième limite 5b.

L'ensemble des premiers fils présents dans la portion amont 4a de la texture 1 est ainsi divisé lors du tissage en deux sous-ensembles de premiers fils à partir de la première limite 5a. Le premier sous-ensemble de premiers fils est présent dans la première partie 7, et le deuxième sous-ensemble de premiers fils lie des deuxièmes fils dans la deuxième partie 9. Le premier sous-ensemble de premiers fils peut ne pas être lié aux deuxièmes fils dans la portion P ou en variante être lié à des deuxièmes fils de sorte à former un tissu bidimensionnel. Au-delà de la deuxième limite 5b, les premiers fils du premier sous-ensemble lient les deuxièmes fils dans la portion aval 4b.

Cette déliaison permet de définir un logement situé entre les première 5a et deuxième 5b limites, qui sépare la première partie 7 de la deuxième partie 9. L'élément amortissant 3 est alors inséré dans le logement 5 ainsi obtenu, entre la première partie 7 et la deuxième partie 9.

On peut ensuite réaliser, si cela est nécessaire, une étape de mise en forme de la texture 1 munie de l'élément amortissant 3. En variante, cette étape de mise en forme est omise, la texture 1 étant directement tissée à la forme souhaitée.

On forme ensuite une matrice dans la porosité de la texture 1, éventuellement mise en forme, afin de densifier celle-ci et obtenir une pièce en matériau composite.

La formation de la matrice dans la porosité de la texture fibreuse 1 est effectuée de manière connue en soi.

La nature de la matrice est choisie en fonction de l'application envisagée. La matrice peut être une matrice organique obtenue notamment à partir d'une résine précurseur telle qu'une résine époxyde, bismaléimide ou polyimide, ou une matrice en carbone ou une matrice en céramique. Dans le cas d'une matrice organique, la texture fibreuse est imprégnée par la résine précurseur de matrice, l'imprégnation pouvant être réalisée par exemple par injection par exemple par moulage par injection de résine liquide (technique « Resin Transfer Moulding » ; « RTM »).

Dans le cas d'une matrice en carbone ou en céramique, la densification pourra être réalisée par infiltration chimique en phase gazeuse, ou infiltration chimique par voie gazeuse (« Chemical Vapor Infiltration » ; « CVI ») ou par imprégnation par une composition liquide contenant une résine précurseur de carbone ou de céramique et traitement thermique de pyrolyse du précurseur, ces procédés étant bien connus en soi.

On a représenté à la figure 4 un deuxième exemple de texture 10 selon l'invention qui comprend une pluralité d'éléments amortissant 3 et 13 en matériau viscoélastique disposés chacun dans un logement 5 ou 15 distinct.

Selon l'exemple de la figure 4, un premier élément amortissant 3 est présent sur une première portion P1 de la texture 10, et un deuxième élément amortissant 13 est présent sur une deuxième portion P2 de la texture 10, espacée de la première portion P1. Les première P1 et deuxième P2 portions sont ici disjointes. Le premier élément amortissant 3 peut être identique au deuxième élément amortissant 13. En variante, les premier et deuxième éléments amortissant 3 et 13 peuvent différer au moins de par leur matériau, taille et/ou forme.

Le deuxième élément amortissant 13 est présent dans un deuxième logement 15 défini par une deuxième zone de déliaison de la texture 10, ladite deuxième zone de déliaison séparant, sur une deuxième portion P2 de la texture 10, une troisième partie de surface 17 de la texture 10 d'une quatrième partie de la texture 19 formée par un deuxième tissu tridimensionnel dans lesquels les premiers fils sont tissés avec les deuxièmes fils, la troisième partie de surface de la texture étant formée par une deuxième couche unidimensionnelle de premiers fils ou par un deuxième tissu bidimensionnel dans lequel des premiers fils sont liés avec des deuxièmes fils.

Les caractéristiques qui viennent d'être décrites en lien avec la figure 1 restent applicables aux logements 5 et 15, aux parties 7, 9, 17 et 19 et aux éléments amortissants 3 et 13 de l'exemple de la figure 4.

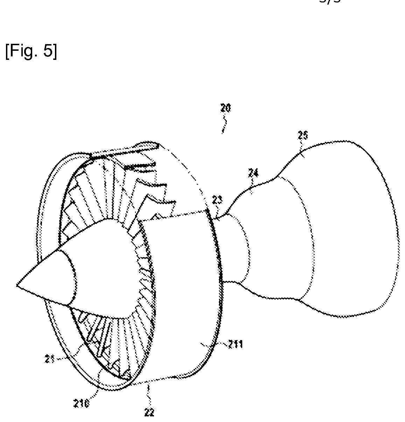

On a représenté à la figure 5 une vue en perspective d'un moteur aéronautique à turbine à gaz 20. Un tel moteur, comme montré très schématiquement par la figure 5 comprend, dans le sens de l'écoulement de flux gazeux, une soufflante 21 disposée en entrée du moteur, un compresseur 22, une chambre de combustion 23, une turbine haute-pression 24 et une turbine basse pression 25. La soufflante 21 comporte une pluralité d'aubes de soufflante 210 entourées par un carter 211.

Selon un exemple, la pièce de turbomachine incorporant la texture fibreuse 1 ou 10 décrite plus haut peut constituer le carter 211 et/ou les aubes de soufflante 210.

L'expression « compris(e) entre ... et ... » doit se comprendre comme incluant les bornes.

## Revendications

1. Texture fibreuse (1 ; 10) tissée destinée à former le renfort fibreux d'une pièce (210 ; 211) de turbomachine, comprenant des premiers fils liés avec des deuxièmes fils, la texture comprenant au moins un élément d'amortissement des vibrations (3 ; 13) en matériau viscoélastique présent dans un logement (5 ; 15) défini par une zone de déliaison, ladite zone de déliaison séparant, sur une portion (P ; P1 ; P2) de la texture, une première partie (7 ; 17) de surface de la texture d'une deuxième partie (9 ; 19) de la texture formée par un tissu tridimensionnel dans lequel des premiers fils sont liés avec des deuxièmes fils, **caractérisée en ce que** la première partie de surface de la texture est formée par une couche unidimensionnelle de premiers fils comprenant uniquement des premiers fils s'étendant sensiblement dans la même direction, ou par un tissu bidimensionnel dans lequel des premiers fils sont liés avec des deuxièmes fils.

2. Texture (10) selon la revendication 1, dans laquelle la texture comprend en outre un deuxième élément d'amortissement des vibrations (13) en un deuxième matériau viscoélastique présent dans un deuxième logement (15) défini par une deuxième zone de déliaison, ladite deuxième zone de déliaison séparant, sur une deuxième portion (P2) de la texture, une troisième partie (17) de surface de la texture d'une quatrième partie (19) de la texture formée par un deuxième tissu tridimensionnel dans lequel des premiers fils sont liés avec des deuxièmes fils, la troisième partie de surface de la texture étant formée par une deuxième couche unidimensionnelle de premiers fils comprenant uniquement des premiers fils s'étendant sensiblement dans la même direction, ou étant formée par un deuxième tissu bidimensionnel dans lequel des premiers fils sont liés avec des deuxièmes fils.

3. Texture (1 ; 10) selon l'une quelconque des revendications 1 ou 2, dans laquelle chaque élément d'amortissement des vibrations (3 ; 13) comprend un matériau élastomère.

4. Texture selon la revendication 3, dans laquelle chaque élément d'amortissement présente un facteur de perte en cisaillement supérieur ou égal à 0,2 sur la plage de température comprise entre -50°C et 120°C, le facteur de perte en cisaillement étant déterminé en imposant une sollicitation en cisaillement sinusoïdale de fréquence égale à 100 Hz, et dans laquelle les premiers fils et les deuxièmes fils sont en fibres de carbone.

5. Texture (1 ; 10) selon la revendication 3 ou 4, dans laquelle chaque élément d'amortissement des vibrations est un matériau élastomère supporté par une structure fibreuse.

6. Texture (1 ; 10) selon l'une quelconque des revendications 1 à 5, dans laquelle chaque élément d'amortissement des vibrations (3 ; 13) a une forme plane.

7. Texture (1 ; 10) selon l'une quelconque des revendications 1 à 6, dans laquelle la première partie de surface de la texture est formée par une couche unidimensionnelle de premiers fils et dans laquelle les premiers fils de cette couche unidimensionnelle sont maintenus en position par un élément de maintien.

8. Texture selon la revendication 7, dans laquelle l'élément de maintien est thermofusible.

9. Texture (1 ; 10) selon l'une quelconque des revendications 1 à 8, dans laquelle les premiers fils et les deuxièmes fils sont en fibres de carbone.

10. Pièce (210 ; 211) de turbomachine en matériau composite comprenant un renfort fibreux formé par une texture (1 ; 10) selon l'une quelconque des revendications 1 à 9 et une matrice densifiant ledit renfort fibreux.

11. Pièce (210 ; 211) selon la revendication 10, dans laquelle la matrice est une matrice organique.

12. Pièce (210 ; 211) selon la revendication 10 ou 11, dans laquelle la pièce est une pièce de soufflante (21) de moteur aéronautique.

13. Turbomachine comprenant une pièce (210 ; 211) selon l'une quelconque des revendications 10 à 12.

## Patentansprüche

1. Gewebte Fasertextur (1; 10), die dazu bestimmt ist, die Faserverstärkung eines Teils (210; 211) einer Turbomaschine zu bilden, umfassend erste Fäden, die mit zweiten Fäden verbunden sind, wobei die Textur zumindest ein Element zur Dämpfung von Schwingungen (3; 13) aus einem viskoelastischen Material aufweist, das in einer Aufnahme (5; 15) vorliegt, die durch eine bindungslose Zone definiert wird, wobei die bindungslose Zone auf einem Abschnitt (P; P1; P2) der Textur einen ersten Teil (7; 17) der Oberfläche der Textur von einem zweiten Teil (9; 19) der Textur trennt, der durch eine dreidimensionale Verwebung gebildet wird, in welcher die ersten Fäden mit den zweiten Fäden verbunden sind,
**dadurch gekennzeichnet, dass** der erste Teil der Oberfläche der Textur durch eine eindimensionale Schicht aus ersten Fäden gebildet wird, die ausschließlich erste Fäden umfasst, die sich im Wesentlichen in derselben Richtung erstrecken, oder durch eine zweidimensionale Verwebung, in welcher erste Fäden mit zweiten Fäden verbunden sind.

2. Textur (10) nach Anspruch 1, wobei die Textur ferner ein zweites Element zur Dämpfung von Schwingungen (13) aus einem zweiten viskoelastischen Material umfasst, das in einer zweiten Aufnahme (15) vorliegt, die durch eine zweite bindungslose Zone definiert wird, wobei die zweite bindungslose Zone auf einem zweiten Abschnitt (P2) der Textur einen dritten Teil (17) der Oberfläche der Textur von einem vierten Teil (19) der Textur trennt, der durch eine zweite dreidimensionale Verwebung gebildet wird, in welcher erste Fäden mit zweiten Fäden verbunden sind, wobei der dritte Teil der Oberfläche der Textur durch eine zweite eindimensionale Schicht aus ersten Fäden gebildet wird, die ausschließlich erste Fäden umfasst, die sich im Wesentlichen in derselben Richtung erstrecken, oder durch eine zweite zweidimensionale Verwebung gebildet wird, in welcher erste Fäden mit zweiten Fäden verbunden sind.

3. Textur (1; 10) nach einem der Ansprüche 1 oder 2, wobei jedes Element zur Dämpfung von Schwingungen (3; 13) ein Elastomermaterial umfasst.

4. Textur nach Anspruch 3, wobei jedes Element zur Dämpfung von Schwingungen in dem Temperaturbereich zwischen -50 °C und 120 °C einen Scherverlustfaktor von mehr als oder gleich 0,2 aufweist, wobei der Scherverlustfaktor durch Ausüben einer sinusförmigen Scherbeanspruchung einer Frequenz gleich 100 Hz bestimmt wird, und wobei die ersten Fäden und die zweiten Fäden aus Kohlenstofffasern bestehen.

5. Textur (1; 10) nach Anspruch 3 oder 4, wobei jedes Element zur Dämpfung von Schwingungen ein Elastomermaterial ist, das von einem Fasergebilde getragen wird.

6. Textur (1; 10) nach einem der Ansprüche 1 bis 5, wobei jedes Element zur Dämpfung von Schwingungen (3; 13) eine flache Form aufweist.

7. Textur (1; 10) nach einem der Ansprüche 1 bis 6, wobei der erste Teil der Oberfläche der Textur durch eine eindimensionale Schicht aus ersten Fäden gebildet wird und wobei die ersten Fäden dieser eindimensionalen Schicht durch ein Halteelement in Position gehalten werden.

8. Textur nach Anspruch 7, wobei das Halteelement heißschmelzbar ist.

9. Textur (1; 10) nach einem der Ansprüche 1 bis 8, wobei die ersten Fäden und die zweiten Fäden aus Kohlenstofffasern bestehen.

10. Teil (210; 211) einer Turbomaschine aus Verbundmaterial, umfassend eine Faserverstärkung, die durch eine Textur (1; 10) nach einem der Ansprüche 1 bis 9 und eine Matrix, welche die Faserverstärkung verdichtet, gebildet wird.

11. Teil (210; 211) nach Anspruch 10, wobei die Matrix eine organische Matrix ist.

12. Teil (210; 211) nach Anspruch 10 oder 11, wobei das Teil ein Gebläseteil (21) eines Flugzeugmotors ist.

13. Turbomaschine umfassend ein Teil (210; 211) nach einem der Ansprüche 10 bis 12.

## Claims

1. Woven fibrous texture (1; 10) intended to form the fibrous reinforcement of a turbomachine part (210; 211), comprising first yarns bonded with second yarns, the texture comprising at least one vibration damping element (3; 13) of viscoelastic material present in a recess (5; 15) defined by a de-bonding zone, said de-bonding zone separating, on a portion (P; P1; P2) of the texture, a first surface part (7; 17) of the texture from a second part (9; 19) of the texture formed by a three-dimensional fabric in which the first yarns are bonded with the second yarns, **characterized in that** the first surface part of the texture is formed by a unidimensional layer of first yarns only comprising first yarns extending essentially in the same direction, or by a two-dimensional fabric in which the first yarns are bonded with the second yarns.

2. Texture (10) according to claim 1, wherein the texture comprises a second vibration damping element (13) of a second viscoelastic material present in a second recess (15) defined by a second de-bonding zone, said second de-bonding zone separating, on a second portion (P2) of the texture, a third surface part (17) of the texture from a fourth part (19) of the texture formed by a three-dimensional fabric in which the first yarns are bonded with the second yarns, the third surface part of the texture being formed by a second unidimensional layer of first yarns only comprising first yarns extending essentially in the same direction, or being formed by a second two-dimensional fabric in which the first yarns are bonded with the second yarns.

3. Texture according to either one of claims 1 or 2, wherein each damping element (3;13) comprises an elastomer material.

4. Texture according to claim 3, wherein each damping element exhibits a shear loss factor greater than or equal to 0.2 over the temperature range comprised between -50°C and 120°C, the shear loss factor being determined by imposing a sinusoidal shear stress of frequency equal to 100 Hz, and wherein the first yarns and second yarns are of carbon fibers.

5. Texture (1; 10) according to claim 3 or 4, wherein each vibration damping element is an elastomer material supported by a fibrous structure.

6. Texture (1; 10) according to any one of claims 1 to 5, wherein each vibration damping element (3; 13) has a flat shape.

7. Texture (1; 10) according to any one of claims 1 to 6, wherein the first part of the texture surface is formed by a unidimensional layer of first yarns and wherein the first yarns of this unidimensional layer are held in position by a holding element.

8. Texture according to claim 7, wherein the holding element can be hot melted.

9. Texture (1; 10) according to any one of claims 1 to 8, wherein the first yarns and the second yarns are of carbon fibers.

10. Turbomachine part (210; 211) of composite material comprising a fibrous reinforcement formed by a texture (1; 10) according to any one of claims 1 to 9 and a matrix densifying said fibrous reinforcement.

11. Part (210; 211) according to claim 10, wherein the matrix is an organic matrix.

12. Part (210; 211) according to claim 10 or 11, wherein the part is a fan part (21) of an aircraft engine.

13. Turbomachine comprising a part (210; 211) according to any one of claims 10 to 12.
